# EUROPEAN PATENT SPECIFICATION

(11) **EP 1 052 206 B1**
(45) Date of publication and mention of the grant of the patent: **23.11.2005**
(21) Application number: 00830307.5
(22) Date of filing: 21.04.2000
(51) Int. Cl.: B65H 3/00, B65H 3/02, B65H 3/32, B65H 3/38

(54) **A process for the peeling of a sheet from a stack of sheets for laminated glazings, and apparatus therefor**
Verfahren zum Abziehen einer Folie für Verbundglas von einem Folienstapel und Vorrichtung dafür
Procédé pour enlever une feuille pour vitrage feuilleté d'une pile de feuilles et dispositif correspondant

(30) Priority: 07.05.1999 IT RM990287
(43) Date of publication of application: 15.11.2000
(73) Proprietor: ABB Process Solutions & Services S.p.A., 20124 Milano (IT)
(72) Inventor: Cirilo, Francesco, Tai Tecn. Automaz. Innov.S.p.A, 00040 Pomezia RM (IT)
(74) Representative: Leone, Mario

(56) References cited:
- EP-A- 0 187 351
- EP-A- 0 608 171
- EP-A- 0 822 454
- WO-A-99/23021
- GB-A- 2 263 468
- US-A- 3 206 042
- US-A- 5 075 939
- US-A- 5 242 262
- US-A- 5 800 646

## Description

The present invention relates to an apparatus and to a process for the peeling of a sheet from a stack of sheets of polivinylbutyrral according to the preamble of the independent claim 1, resp. 19, and known from US-A-5 800 646.

As it is well-known, laminated glass manufacturing industries, like, e.g., the car industry, utilise the so-called sandwich structures in the manufacture of such glazings. I.e., a laminated glazing provides one or more pairs of glass sheets interposed by a sheet of transparent plastic material. In order to form a laminated glazing, the sandwich structure thus assembled is then subjected to a final sheet polymerisation process. The material of the transparent sheet commonly utilised for this purpose is the polivinylbutyrral (PVB).

For the manufacture of such glazings, an industrial process providing the initial assembling steps of each laminated glazing member, fed from an individual feed line and finally assembled into a sandwich structure, is provided. Usually such assembling step is carried out manually, requiring remarkably skilled operators that have to very delicately and quickly stack up each glazing member in order to assemble a sandwich structure.

Moreover, the disclosed European patent application 836 933 to the same applicant teaches a process for the automatic assembling of laminated glass and apparatus therefor, in particular dedicated to the car industry. Such apparatus provides the feeding of each of the three members forming the laminated glazing, i.e., the two glass sheets and the PVB sheet, from three individual conveyors, subsequently positioning and assembling the former in a wholly automatic manner.

It has to be pointed out that the PVB sheets are usually provided as stacks of pre-cut and pre-shaped sheets, in order to ease the handling thereof from the manufacture to the assembly site, and also to reduce the costs entailed in the cutting and preliminary shaping of the sheets prior to the assembling thereof.

Although the above-mentioned laminated glazings assembling could take place automatically, the feeding of the PVB sheets to the apparatus is carried out manually rather than automatically, as the same are prone to tack thereamong during storage, under the action of the temperature and of the weight thereof. This however entails the drawback of requiring the employ of highly skilled manpower in order to manually carry out the detaching, or «peeling» of each sheet from the stack prior to feeding the former to the above-mentioned assembling step, as well as the problem that at times such «peeling» is hindered by the partial tacking of a sheet to the underlying one, entailing possible delays to the production line.

In order to provide an automated process for the peeling of a sheet from a stack of sheets, in US 5800646 there is disclosed a method and apparatus for manipulating a film of material from a stack of films of the same. According to this document, there is provided an apparatus which comprises a peeling device which includes for suction cups pivotally mounted onto a swinging frame. The operation comprises a first step where the suction cups hold the corner of the film to be grabbed and subsequently the suction devices are pivoted by actuators in order to bend the corner portion of the film causing the detachment of the last from the stack of film underlying.

Then, a pair of tong shaped fingers mounted at the end portion of each cup device grasp the lifted portion of the film therefore obtaining the subsequent manipulating of the film so detached from the stack of films.

This apparatus, although being very sturdy and reliable is suitable for the handling of films only made in a material which does not tend to glue to each other when being stacked, since the bending operation of the corner portion of the film would not guarantee the complete detachment of the first film from the underlying one. Therefore, this apparatus would not solve the handling problems which PVB provides.

Therefore, an object of the present invention is to overcome the above-mentioned drawbacks and problems of the state of the art by providing an apparatus which provides an automatic feeding of a sheet from a stack of sheets, and which provides the automatic peeling of each sheet from said stack of sheets.

A further object of the present invention is to provide an apparatus for the peeling of sheets from a stack of sheets suitable for peeling an individual sheet from a stack of sheets and feeding the same to an area remote from said stack of sheets.

A further object of the present invention is to provide an apparatus for the peeling of sheets from a stack of sheets, in particular made of PVB, for the assembling of laminated glazings.

A further object of the present invention is to provide a process for the peeling of PVB sheets from a stack of sheets in order to subsequently feed a sheet to a remote area from said laminated glazings assembling apparatus.

Therefore, according to the present invention these objects are achieved by means of an apparatus and process for the peeling of a sheet from a stack of sheets made of PVP for laminated glazing, comprising the features of claim 1, resp. 19.

The present invention will be hereinafter be better disclosed according to a preferred embodiment thereof, given by way of example and not for limiting purposes, with reference to the annexed drawings, wherein:
Figure 1 is a top plan view of the apparatus of the present invention;
Figure 2 is an elevational side view of the apparatus of the present invention;
Figure 3 is a elevational front view of the apparatus of the present invention;
Figure 4 is a elevational front view of the peeling device of the apparatus of the present invention;
Figures 5(a) and 5(b) are elevational side views of the peeling device of FIG. 4; and
Figure 6 is a bottom plan view of the peeling device of Figure 4.

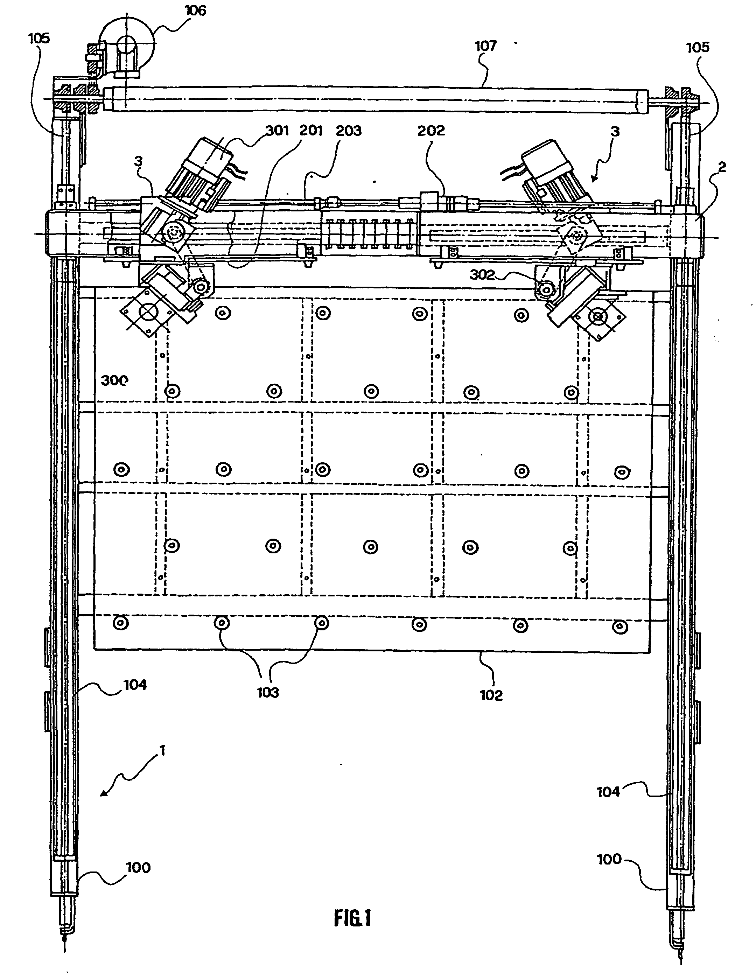

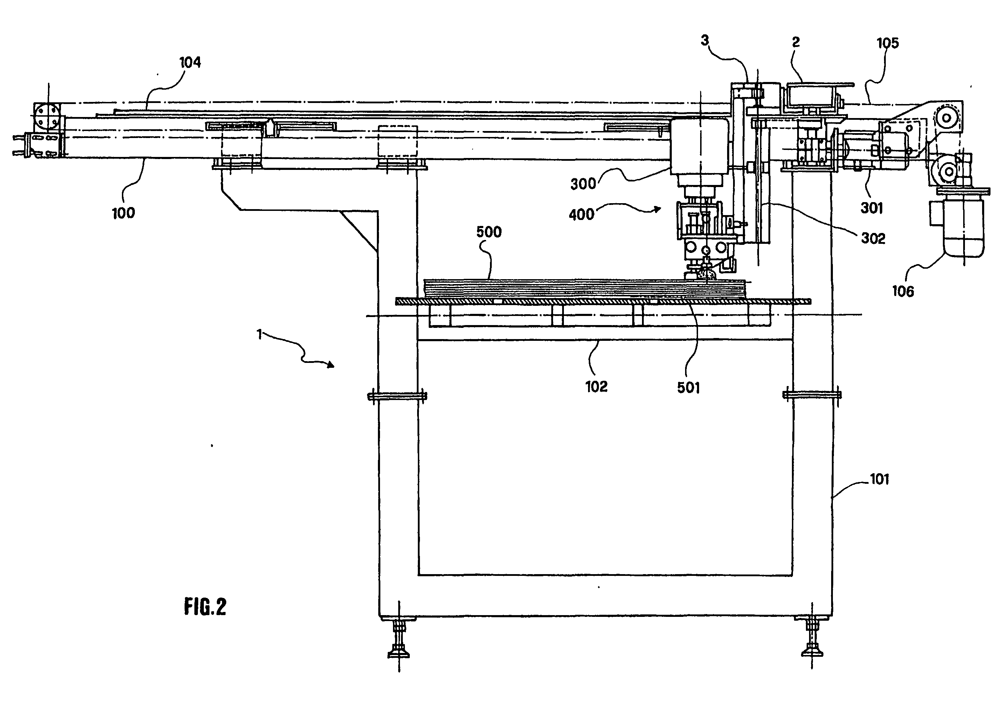

With reference to Figures 1, 2 and 3 the apparatus of the present invention, in particular for the use of stacks of sheets made of polivinylbutyrral (PVB) apt to form laminated glazing such as those used in the car industry, is shown.

According to the invention, the apparatus provides a first frame 1, substantially made of a pair of arms 100, a base 101 being made integral thereto. A grid-shaped flat structure 102, apt to accommodate a stack 500 of PVB sheets is located at the central area of the frame 1.

It has to be pointed out that usually the stacks 500 of PVB sheets are positioned onto flat plates or trays in order to ease the handling and the storage thereof. A tray 510 for supporting the stack 500 is schematically depicted in the figures, however for the sake of simplicity a detailed description thereof will be omitted, as it is already known to the art.

At the top portion of each arm 100 a guide 104 is mounted, for implementing a sliding support for a substantially elongated second frame 2, the latter being slidably and orthogonally mounted on top of said frame 1. The second frame 2 is connected at the two ends thereof to a belt (or chain) drive 105 connected to the first frame 1. The drive 105 is operated by means of a reduction motor unit 106 providing a shaft 107 for transmitting the motion of the drive 105 between the two arms 100.

At the top portion of the second frame 2, a pair of third frame 3 equally spaced one from the other, are slidably mounted. The frames 3 are apt to slide onto the second frame 2 by means of guide members 201 integrally mounted onto said frame 2. For the displacement of the frames 3, a drive comprising a reduction gear-motor unit 202 and a worm guide 203 integrally mounted onto said frame 2 is provided. The arrangement is such that the worm drive 203, during the rotation thereof, enables the mutual spacing and narrowing of the frames 3 onto the frame 2.

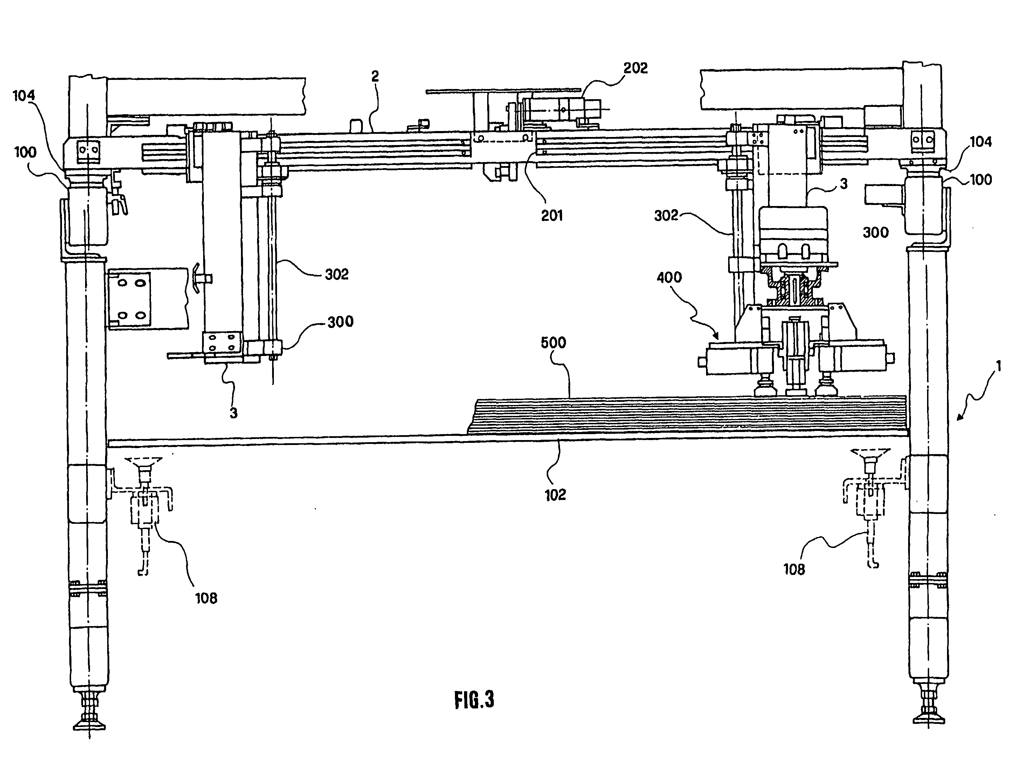

As it is shown in FIGS. 1 and 3, two actuators 108 are provided onto the frame 1 in order to lock the position of said tray 510 and the stack 500 onto the frame 1 and with respect to the frames 2 and 3.

As it will hereinafter be apparent, each of the frames 3 forms a movable support for a peeling device 400 (only one being shown in the figures) for a single sheet 501 of a stack 500 of sheets when the latter is placed onto the flat structure 102.

More precisely, the frame 3 has a support plate 300 for the peeling device 400, said plate 300 being slidadably mounted onto the frame 3 and with respect to the vertical direction thereof. The displacement of the support plate 300 is carried out by means of a gear reduction motor unit 301 integrally mounted to the frame 3 and connected to the plate 300 by means of a drive system comprising a belt-pulley and screw-screw nut unit 302. The arrangement is such that to each displacement of the gear reduction motor unit 301 corresponds a respective vertical displacement of the support plate 300, and therefore of the peeling device 400 mounted thereon.

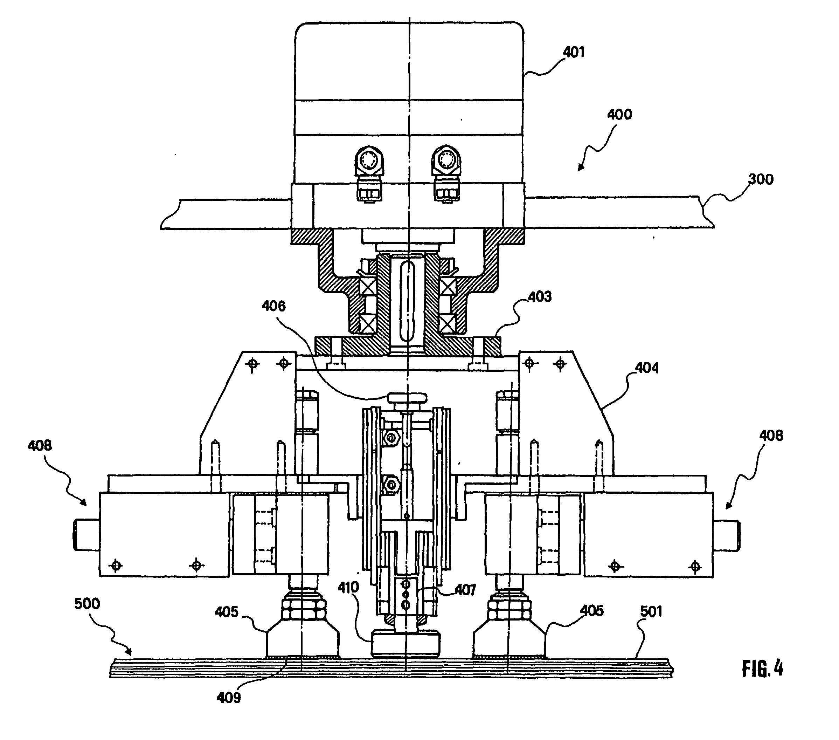

Referring to Figures 4 to 6, a detailed description of the peeling device 400 and of the operation thereof will hereinafter be provided. According to the present invention, the peeling device 400 has a pneumatic rotary actuator 401 integrally mounted on the plate 300. The rotary actuator 401 has respective connecting members 402 for the feeding thereof. The output shaft of the actuator 401 rotatably engages a bush 403 made integral to a structure 404. The structure 404 realises a support for a pair of pneumatic actuators 405, a position detecting device 406 and a grabbing device 407 of an individual sheet 501. It has to be pointed out that the structure 404 can turn on the axis of rotation of the shaft of the rotating actuator 401.

More precisely, each pneumatic actuator 405 is pneumatically connected to an external vacuum source (not shown in the figure) for implementing a vacuum pressure at the surface 409 which contacts the underlying sheet 501. The contact surface 409 is drilled and has a high roughness surface in order to ensure the contact and the gripping between the sheet 501 and the actuator 405. Moreover, each actuator 405 is mounted at a movable end of a respective member 408. Each member 408 houses a pneumatic displacement device externally fed, thereby rendering the actuator 405 apt to be displaced due to an operation of the member 408.

The device 406 forms a position contact-type sensor for detecting the position of the peeling device 400 with respect to the first sheet 501 of the stack 500. More precisely, the device 406 has an end 410 vertically resilient against the action of a spring 411. During the descent of the device 400 and after the end 410 contacts the stack 500, a vertical displacement of the end 410 takes place, generating different signals by means of electrical limit switches (not shown in the figures) which are sensed by the device 406 during the upwards displacement thereof. The signals are sent to a control unit (not shown in the figures). Thus, each signal is directly proportional to the position of the end 410. Through a predetermined range of signal values, the control unit can reduce or cut the power supply to the electrical engines 301 in order to avoid a further descent of the device 400, possibly damaging the latter or the stack of sheets 500.

Moreover, a further sensor (not shown in the figures) can be provided in order to output a «lack of sheet 501» signal or a «out of stack of sheets 500» signal to the control unit.

The sheet grabbing device 407 is made of a pair of movable tong-shaped members 412. The feeding by opening/closure of the tong-shaped members 412 is carried out by means of an external compressed air supply connected through connecting members 413 mounted onto the structure 404.

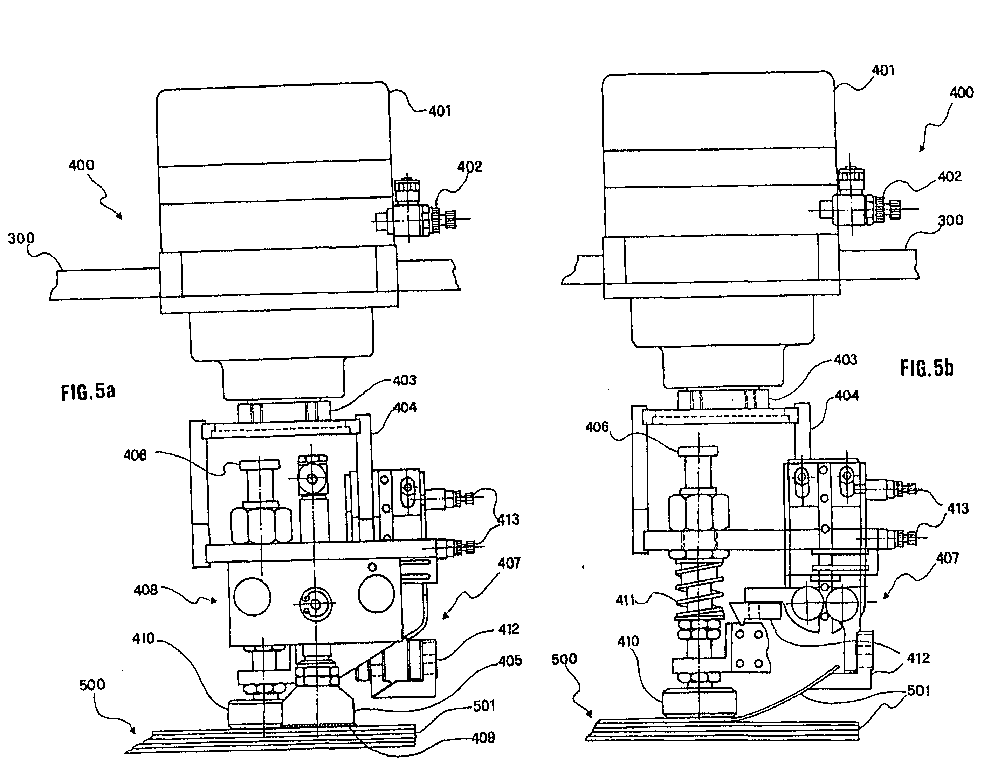

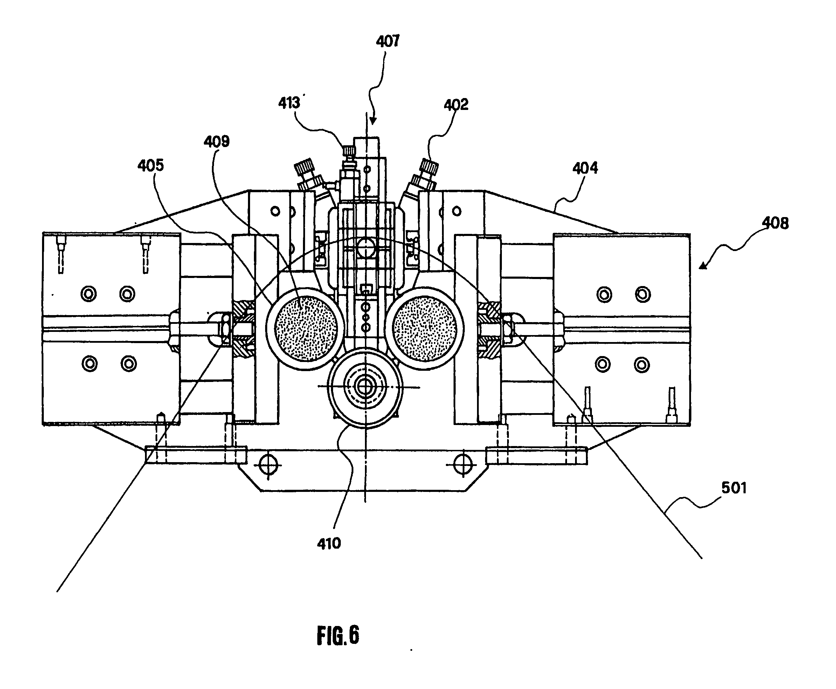

Referring now to FIGS. 5a, 5b and 6, the operation of the grabbing device 407 and peeling device 400 of the apparatus of the present invention will be disclosed.

During operation, at first the stack 500 is positioned onto the flat structure 102 of the apparatus. Then, the frames 2 and 3 are actuated and positioned with respect to the peeling edge of the sheets of the stack 500. After the positioning of said frames 2 and 3, the ratiomotor units 301 are operated for descending the respective peeling devices 400 until the end 410 abuts onto the first sheet 501 of the stack 500, and until a subsequent displacement downwardly of the device 400 generates a signal in the device 406, and therefore the stop of the ratiomotor units 301. Then, firstly the pneumatic actuators 405 are operated in order to adhere onto an end portion of the sheet 501, therefore locking the latter in position. Subsequently the members 408 are operated for spacing the actuators 405 one from the other. The mutual spacing of the actuators 405 drags the portion of the sheet 501 adhered thereto and generating an internal stretch that causes tiny waves or laps onto the surface of the material. Such internal stretch-associated waves or laps at the dragged sheet portion lead to the detachment of the sheet material from the underlying sheet.

Then, the pneumatic rotary actuators 401 are operated, causing an angular displacement of the structure 404. The angular displacement of the structure 404 causes the pneumatic actuators 405 to turn and drag the sheet portion 501 adhered thereto by the negative pressure.

Being formed of an elastic material, i.e. PVB, the sheet 501 further strains, creating a wave on the edge thereof which brings this edge portion upwards until reaching the closing area of the tongs 412 (see in particular Figures 5b and 6). Then the tongs 412 are operated to close, therefore grabbing the edge area of the sheet 501 so dragged therebetween. It has to be pointed out that the two tongs 412 are electrically connected by means of a one line circuit to the control unit (not shown in the figures). This arrangement enables to output a warning signal to the control unit in case the tongs 412 close in absence of a sheet 501 therebetween. The warning signal is then processed by the control unit for outputting a warning signal to the operators, such as for example an acoustic signal.

The sheet 501, once locked between the tongs 412, is peeled off by dragging the same upwards and towards the front portion of the frame 1 while operating the frames 3 and 2 that drag the device 400. Then the sheet 501 so peeled is fed to a subsequent glazing assembly line, located in front of the apparatus of the present invention.

At end of the feeding step, the apparatus returns to the starting condition in order to carry out a new peeling cycle, as above-disclosed.

It will be apparent to those skilled in the art that the present invention is not limited to the above disclosed embodiment but comprises all modified embodiments which fall within the scope of the annexed claims.

## Claims

1. An apparatus for the peeling of a sheet (501) from a stack (500) of sheets made of PVB for laminated glazing, comprising:
- an area (102) for accommodating said stack (500);
- a first frame (1) and a second frame (2) movably located on said first frame (1);
- driving means (105,106,107) for the displacement of said second frame (2) on said first frame (1);
- at least one third frame (3) slidably mounted on said second frame (2);
- driving means (201,202,203) for driving said at least one third frame (3) on said second frame (2); and
- peeling means (400) for the peeling of said sheets (501), said peeling means being mounted onto said third frame (3) in a slideable manner along a vertical direction,
the apparatus being **characterised in that** it further comprises:
- at least a pair of actuators (405), each having a contacting area (409) apt to adhere to a respective edge area of a sheet (501) to be peeled;
- actuating means (408) which space horizontally said actuators (405) one from the other; and
- a rotary actuator (401) for the rotation of said a pair of actuators (405) around its axis of rotation.

2. The apparatus according to the preceding claim, **characterized in that** said driving means of said second frame (2) comprises:
- at least one electrical motor (106);
- at least one drive (107);
- connection means (105) for connecting said at least one drive (107) and said second frame (2) therebetween; and
- sliding means (104) for slidably supporting said second frame (2) on said first frame (1).

3. The apparatus according to claim 2, **characterized in that** said connection means are selected from the group comprising:
- at least one pair of belt and pulley members; and
- at least one pair of chain and pinion members.

4. The apparatus according to the preceding claims, **characterized in that** said sliding means comprise at least one pair of guides (104) integral to the first frame (1) and arranged in the longitudinal direction thereof.

5. The apparatus according to any one of the preceding claims, **characterized in that** said peeling means (400) further comprises:
- detecting means (406) for detecting the position thereof with respect to the sheet (501) to be peeled and to the frame (3); and
- grabbing means (407,412) for holding a sheet (501) to be peeled from said stack (500) of sheets.

6. The apparatus according to claim 5, **characterized in that** said position detecting means (406) comprises a position detecting device of the contacting type, comprising a contacting end (410) and a spring (411), the detecting device providing signals which are proportional to the position of said contacting end (410).

7. The apparatus according to claim 5 o 6, **characterized in that** said grabbing means comprises a pair of tongs shaped members (412) apt to grab and lock in position a corner area of the peeled sheet (501).

8. The apparatus according to one or more of the preceding claims, **characterized in that** each actuator (405) is pneumatical.

9. The apparatus according to one or more of the preceding claims, **characterized in that** said driving means comprise:
- at least a drive unit (301);
- a driving transmission (302); and
- guide means (300) for the driving transmission.

10. The apparatus according to claim 9, **characterized in that** said drive unit comprises a belt-pulley and screw-screw nut unit (302) connected to said drive unit (301) and to said guide means (300).

11. The apparatus according to claim 10, **characterized in that** said guide means comprises a plate (300), slidably mounted on said third frame (3) and for the support of said peeling means (400).

12. The apparatus according to any one of the preceding claims, **characterized in that** said driving means of said at least one third frame (3) on said second frame (2) comprises:
- at least a drive unit (202);
- at least a drive transmission (203); and
- sliding means (201).

13. The apparatus according to claim 12, **characterized in that** said drive unit is an electric motor (202).

14. The apparatus according to claim 12 or 13, **characterized in that** said at least a drive transmission is a worm gear reduction motor unit (203).

15. The apparatus according to claim 12-14, **characterized in that** said sliding means comprises at least one guide (201) for the sliding support of said frame (3) onto said frame (2).

16. The apparatus according to one or more of the preceding claims, **characterized in that** said sheet accommodation region (102) comprises:
- a flat structure (102) for supporting said stack (500) of sheets (501);
- sliding means (103) for supporting said stack (500) onto said flat structure (103); and
- locking means (108) for locking said stack (500) of sheets (501).

17. The apparatus according to claim 16, **characterized in that** said sliding support means comprises ball screws (103) integrally mounted at the top surface of said plane structure (102).

18. The apparatus according to claim 17, **characterized in that** said locking means are actuators (108), integrally mounted on said first frame (1) and apt to move upwards/downwards with respect to said frame (1), and to lock in position said stack (500) with respect to said first frame (1).

19. A process for the peeling of a sheet (501) from a stack (500) of sheets made of PVB for laminated glazing, comprising the following steps:
- positioning said stack (500) on a flat structure (102) with respect to a frame (1) and locking it thereon with first locking means (108);
- positioning of a peeling means (400) until abutment onto the first sheet (501) of said stack (500);
- controlling the position of the peeling means (400) with respect to said first sheet (501) of said stack (500);
- adhering said peeling means (400) to an end portion of the sheet (501) in a removable manner by second locking means (405); and
- peeling off the sheet (501) upwards and backwardly with respect to the length direction of said stack of sheets (500),
the process being **characterised by** the fact of further comprising, before said step of peeling off the sheet (501) the following steps:
- surface stretching said sheet (501) by mutually spacing said second locking means (405) therebetween, carrying out the detachment of the portion of the sheet (501) from the material of the underlying sheet portion (501) of said stack (500);
- rotating said peeling means (400) and the portion of the sheet (501) adhered to, in order to further deforming said portion of the sheet (501) until bringing upwards the edge thereof; and
- operating grabbing means (412) mounted on said peeling means (400), thereby holding said edge portion of the sheet (501) between said grabbing means (412).

## Patentansprüche

1. Vorrichtung zum Abschälen eines Blattes (501) von einem Stapel (500) von Blättern aus PVB für eine Verbundverglasung, mit:
- einem Bereich (102) zum Aufnehmen des Stapels (500);
- einem ersten Rahmen (1) und einem zweiten Rahmen (2), der auf dem ersten Rahmen (1) beweglich angeordnet ist;
- einer Antriebseinrichtung (105, 106, 107) für die Verlagerung des zweiten Rahmens (2) auf dem ersten Rahmen (1);
- wenigstens einem dritten Rahmen (3), der auf dem zweiten Rahmen (2) verschiebbar gelagert ist;
- einer Antriebseinrichtung (201, 202, 203) zum Antreiben des wenigstens einen dritten Rahmens (3) auf dem zweiten Rahmen (2); und
- einer Abschäleinrichtung (400) zum Abschälen der Blätter (501), wobei die Abschäleinrichtung auf dem dritten Rahmen (3) verschiebbar längs einer vertikalen Richtung gelagert ist,
wobei die Vorrichtung **dadurch gekennzeichnet ist, dass** sie weiter aufweist:
- wenigstens ein Paar Stellantriebe (405), von denen jeder einen Kontaktierbereich (409) hat, der in der Lage ist, an einem Randbereich eines abzuschälenden Blattes (501) zu haften;
- eine Betätigungseinrichtung (408), welche die Stellantriebe (405) horizontal von einander beabstandet; und
- einen Drehstellantrieb (401) für die Drehung des Stellantriebspaares (405) um dessen Drehachse.

2. Vorrichtung nach dem vorhergehenden Anspruch, **dadurch gekennzeichnet, dass** die Antriebseinrichtung des zweiten Rahmens (2) aufweist:
- wenigstens einen Elektromotor (106);
- wenigstens einen Antrieb (107);
- eine Verbindungseinrichtung (105) zum Verbinden des wenigstens einen Antriebs (107) mit dem zweiten Rahmen (2); und
- eine Verschiebeeinrichtung (104) zum verschiebbaren Lagern des zweiten Rahmens (2) auf dem ersten Rahmen (1).

3. Vorrichtung nach Anspruch 2, **dadurch gekennzeichnet, dass** die Verbindungseinrichtung aus der Gruppe ausgewählt ist, welche umfasst:
- wenigstens ein Paar Riemen- und Riemenscheibenteile; und
- wenigstens ein Paar Ketten- und Ritzelteile.

4. Vorrichtung nach den vorhergehenden Ansprüchen, **dadurch gekennzeichnet, dass** die Verschiebeeinrichtung wenigstens ein Paar Führungen (104) aufweist, die integral mit dem ersten Rahmen (1) ausgebildet und in der Längsrichtung desselben angeordnet sind.

5. Vorrichtung nach einem der vorhergehenden Ansprüche, **dadurch gekennzeichnet, dass** die Abschäleinrichtung (400) weiter aufweist:
- eine Erfassungseinrichtung (406) zum Erfassen der Position derselben in Bezug auf das abzuschälende Blatt (501) und den Rahmen (3); und
- eine Greifeinrichtung (407, 412) zum Halten eines von dem Stapel (500) von Blättern abzuschälenden Blattes (501).

6. Vorrichtung nach Anspruch 5, **dadurch gekennzeichnet, dass** die Positionserfassungseinrichtung (406) eine Positionserfassungsvorrichtung aufweist, die berührend arbeitet, mit einem Berührungsende (410) und einer Feder (411), wobei die Erfassungsvorrichtung Signale liefert, welche zu der Position des Berührungsendes (410) proportional sind.

7. Vorrichtung nach Anspruch 5 oder 6, **dadurch gekennzeichnet, dass** die Greifeinrichtung ein Paar zangenförmige Teile (412) aufweist, die in der Lage sind, einen Eckbereich des abgeschälten Blattes (501) zu ergreifen und in seiner Position zu verriegeln.

8. Vorrichtung nach einem oder mehreren der vorhergehenden Ansprüche, **dadurch gekennzeichnet, dass** jeder Stellantrieb (405) pneumatisch ist.

9. Vorrichtung nach einem oder mehreren der vorhergehenden Ansprüche, **dadurch gekennzeichnet, dass** die Antriebseinrichtung aufweist:
- wenigstens eine Antriebseinheit (301);
- eine Antriebstransmission (302); und
- eine Führungseinrichtung (300) für die Antriebstransmission.

10. Vorrichtung nach Anspruch 9, **dadurch gekennzeichnet, dass** die Antriebseinheit eine Riemenscheiben- und Spindel/Spindelmutter-Einheit (302) aufweist, die mit der Antriebseinheit (301) und mit der Führungseinrichtung (300) verbunden ist.

11. Vorrichtung nach Anspruch 10, **dadurch gekennzeichnet, dass** die Führungseinrichtung eine Platte (300) aufweist, die auf dem dritten Rahmen (3) verschiebbar gelagert ist und zum Abstützen der Abschäleinrichtung (400) dient.

12. Vorrichtung nach einem der vorhergehenden Ansprüche, **dadurch gekennzeichnet, dass** die Antriebseinrichtung des wenigstens einen dritten Rahmens (3) auf dem zweiten Rahmen (2) aufweist:
- wenigstens eine Antriebseinheit (202);
- wenigstens eine Antriebstransmission (203); und
- eine Verschiebeeinrichtung (201).

13. Vorrichtung nach Anspruch 12, **dadurch gekennzeichnet, dass** die Antriebseinheit ein Elektromotor (202) ist.

14. Vorrichtung nach Anspruch 12 oder 13, **dadurch gekennzeichnet, dass** die wenigstens eine Antriebstransmission eine Untersetzungsschneckengetriebe-Motor-Einheit (203) ist.

15. Vorrichtung nach Anspruch 12 -14, **dadurch gekennzeichnet, dass** die Verschiebeeinrichtung wenigstens eine Führung (201) zum verschiebbaren Lagern des Rahmens (3) auf dem Rahmen (2) aufweist.

16. Vorrichtung nach einem oder mehreren der vorhergehenden Ansprüche, **dadurch gekennzeichnet, dass** das Bogenaufnahmegebiet (102) aufweist:
- ein ebenes Gebilde (102) zum Tragen des Stapels (500) von Blättern (501);
- eine Verschiebeeinrichtung (103) zum Lagern des Stapels (500) auf dem flachen Gebilde (103); und
- eine Verriegelungseinrichtung (108) zum Verriegeln des Stapels (500) von Blättern (501).

17. Vorrichtung nach Anspruch 16, **dadurch gekennzeichnet, dass** die Verschiebelagerungseinrichtung Kugelschraubenspindeln (103) aufweist, die an der oberen Oberfläche des ebenen Gebildes (102) integral angebracht sind.

18. Vorrichtung nach Anspruch 17, **dadurch gekennzeichnet, dass** die Verriegelungseinrichtungen Stellantriebe (108) sind, welche auf dem ersten Rahmen (1) integral angebracht sind und in der Lage sind, sich in Bezug auf den Rahmen (1) aufwärts/ abwärts zu bewegen und den Stapel (500) in Bezug auf den ersten Rahmen (1) in seiner Position zu verriegeln.

19. Verfahren zum Abschälen eines Blattes (501) von einem Stapel (500) von Blättern aus PVB für eine Verbundverglasung, beinhaltend die folgenden Schritte:
- Positionieren des Stapels (500) auf einem ebenen Gebilde (102) in Bezug auf einen Rahmen (1) und Verriegeln desselben darauf mit einer ersten Verriegelungseinrichtung (108);
- Positionieren einer Abschäleinrichtung (400), bis sie auf dem ersten Blatt (501) des Stapels (500) in Anlage ist;
- Steuern der Position der Abschäleinrichtung (400) in Bezug auf das erste Blatt (501) des Stapels (500);
- Haften der Abschäleinrichtung (400) an einem Endteil des Blattes (501) auf eine bewegliche Art und Weise durch eine zweite Verriegelungseinrichtung (405); und
- Abschälen des Blattes (501) aufwärts und rückwärts in Bezug auf die Längsrichtung des Stapels von Blättern (500),
wobei das Verfahren durch die Tatsache **gekennzeichnet** ist, dass es weiter vor dem Schritt des Abschälens des Blattes (501) die folgenden Schritte umfasst:
- Oberflächendehnen des Blattes (501) durch Auseinanderfahren der zweiten Verriegelungseinrichtung (405), Ausführen des Ablösens des Teils des Blattes (501) von dem Material des darunter gelegenen Blattteils (501) des Stapels (500);
- Drehen der Abschäleinrichtung (400) und des Teils des Blattes (501), der daran haftet, um den Teil des Blattes (501) weiter zu verformen, bis der Rand desselben nach oben gebracht wird; und
- Betätigen der Greifeinrichtung (412), die auf der Abschäleinrichtung (400) angebracht ist, um **dadurch** den Randteil des Blattes (501) in der Greifeinrichtung (412) zu halten.

## Revendications

1. Dispositif pour enlever une feuille (501) à partir d'une pile (500) de feuilles constituées de PVB (polybutyral de vinyle) destinées à un vitrage feuilleté, comportant :
- une zone (102) destinée à recevoir ladite pile (500),
- un premier châssis (1) et un deuxième châssis (2) positionné de manière mobile sur ledit premier châssis (1),
- des moyens d'entraînement (105, 106, 107) destinés au déplacement dudit deuxième châssis (2) sur ledit premier châssis (1),
- au moins un troisième châssis (3) monté de manière coulissante sur ledit deuxième châssis (2),
- des moyens d'entraînement (201, 202, 203) pour entraîner ledit au moins un troisième châssis (3) sur ledit deuxième châssis (2), et
- des moyens d'enlèvement (400) pour l'enlèvement desdites feuilles (501), lesdits moyens d'enlèvement étant montés sur ledit troisième châssis (3) d'une manière pouvant coulisser le long d'une direction verticale,
le dispositif étant **caractérisé en ce qu'**il comporte de plus :
- au moins une paire d'actionneurs (405), ayant chacun une zone de contact (409) capable de se coller sur la zone de bord respective d'une feuille (501) à enlever,
- des moyens d'actionnement (408) qui espacent horizontalement lesdits actionneurs (405) l'un par rapport à l'autre, et
- un actionneur rotatif (401) destiné à la mise en rotation d'une dite paire d'actionneurs (405) autour de son axe de rotation.

2. Dispositif selon la revendication 1, **caractérisé en ce que** lesdits moyens d'entraînement dudit deuxième châssis (2) comportent :
- au moins un moteur électrique (106),
- au moins un entraînement (107),
- des moyens de liaison (105) pour relier ledit au moins un entraînement (107) et ledit deuxième châssis (2) entre eux, et
- des moyens de coulissement (104) pour supporter de manière coulissante ledit deuxième châssis (2) sur ledit premier châssis (1).

3. Dispositif selon la revendication 2, **caractérisé en ce que** lesdits moyens de liaison sont sélectionnés parmi le groupe comportant :
- au moins une paire d'éléments formant courroie et poulie, et
- au moins une paire d'éléments formant chaîne et pignon.

4. Dispositif selon l'une quelconque des revendications précédentes, **caractérisé en ce que** lesdits moyens de coulissement comportent au moins une paire de guides (104) d'un seul tenant avec le premier châssis (1) et agencés dans la direction longitudinale de celui-ci.

5. Dispositif selon l'une quelconque des revendications précédentes, **caractérisé en ce que** lesdits moyens d'enlèvement (400) comportent de plus :
- des moyens de détection (406) pour détecter la position de ceux-ci par rapport à la feuille (501) à enlever et au châssis (3), et
- des moyens de saisie (407, 412) pour supporter une feuille (501) à retirer de ladite pile (500) de feuilles.

6. Dispositif selon la revendication 5, **caractérisé en ce que** lesdits moyens de détection de position (406) comportent un dispositif de détection de position du type à contact, comportant une extrémité de contact (410) et un ressort (411), le dispositif de détection fournissant des signaux qui sont proportionnels à la position de ladite extrémité de contact (410).

7. Dispositif selon la revendication 5 ou 6, **caractérisé en ce que** lesdits moyens de saisie comportent une paire d'éléments en forme de pince (412) capables de saisir et bloquer en position une zone de coin de la feuille enlevée (501).

8. Dispositif selon l'une quelconque des revendications précédentes, **caractérisé en ce que** chaque actionneur (405) est pneumatique.

9. Dispositif selon l'une quelconque des revendications précédentes, **caractérisé en ce que** lesdits moyens d'entraînement comportent :
- au moins une unité d'entraînement (301),
- une transmission menante (302), et
- des moyens de guidage (300) de la transmission menante.

10. Dispositif selon la revendication 9, **caractérisé en ce que** ladite unité d'entraînement comporte une unité de poulie-courroie et écrou-vis (302) reliée à ladite unité d'entraînement (301) et auxdits moyens de guidage (300).

11. Dispositif selon la revendication 10, **caractérisé en ce que** lesdits moyens de guidage comportent une plaque (300), montée de manière coulissante sur ledit troisième châssis (3) et destinée au support desdits moyens d'enlèvement (400).

12. Dispositif selon l'une quelconque des revendications précédentes, **caractérisé en ce que** lesdits moyens d'entraînement dudit au moins un troisième châssis (3) situés sur ledit deuxième châssis (2), comportent :
- au moins une unité d'entraînement (202),
- au moins une transmission d'entraînement (203), et
- des moyens de coulissement (201).

13. Dispositif selon la revendication 12, **caractérisé en ce que** ladite unité d'entraînement est un moteur électrique (202).

14. Dispositif selon la revendication 12 ou 13, **caractérisé en ce que** ladite au moins une transmission d'entraînement est une unité de moto-réducteur à vis sans fin (203).

15. Dispositif selon l'une quelconque des revendications 12 à 14, **caractérisé en ce que** lesdits moyens de coulissement comportent au moins un guide (201) destiné au support coulissant dudit châssis (3) sur ledit châssis (2).

16. Dispositif selon l'une quelconque des revendications précédentes, **caractérisé en ce que** ladite zone de recueil de feuille (102) comporte :
- une structure plate (102) pour supporter ladite pile (500) de feuilles (501),
- des moyens de coulissement (103) pour supporter ladite pile (500) sur ladite structure plate (103), et
- des moyens de blocage (108) pour bloquer ladite pile (500) de feuilles (501).

17. Dispositif selon la revendication 16, **caractérisé en ce que** lesdits moyens de support coulissant comportent des vis à bille (103) montées d'un seul tenant au niveau de la surface supérieure de ladite structure plate (102).

18. Dispositif selon la revendication 17, **caractérisé en ce que** lesdits moyens de blocage sont des actionneurs (108), montés d'un seul tenant sur ledit premier châssis (1) et capables de se déplacer vers le haut/vers le bas par rapport audit châssis (1), et de bloquer en position ladite pile (500) par rapport audit premier châssis (1).

19. Procédé d'enlèvement d'une feuille (501) à partir d'une pile (500) de feuilles constituées de PVB destinées à un vitrage feuilleté, comportant les étapes consistant à :
- positionner ladite pile (500) sur une structure plate (102) par rapport à un châssis (1) et la bloquer sur celui-ci à l'aide de premiers moyens de blocage (108),
- positionner des moyens d'enlèvement (400) jusqu'à ce qu'ils viennent en butée sur la première feuille (101) de ladite pile (500),
- commander la position des moyens d'enlèvement (400) par rapport à ladite première feuille (501) de ladite pile (500),
- faire coller lesdits moyens d'enlèvement (400) à une partie d'extrémité de la feuille (501) d'une manière amovible par des seconds moyens de blocage (405), et
- enlever la feuille (501) vers le haut et vers l'arrière par rapport à la direction de la longueur de ladite pile de feuilles (500),
le procédé étant **caractérisé par le fait qu'**il comporte de plus, avant ladite étape d'enlèvement de la feuille (501) les étapes consistant à :
- étirer une surface de ladite feuille (501) en écartant mutuellement lesdits seconds moyens de blocage (405), effectuer la séparation de la partie de la feuille (501) à partir du matériau de la partie de feuille sous-jacente (501) de ladite pile (500),
- mettre en rotation lesdits moyens d'enlèvement (400) et la partie de la feuille (501) collée à ceux-ci, afin de déformer encore ladite partie de la feuille (501) jusqu'à amener le bord de celle-ci vers le haut, et
- actionner des moyens de saisie (412) montés sur lesdits moyens d'enlèvement (400), en supportant ainsi ladite partie de bord de la feuille (501) entre lesdits moyens de saisie (412).
